(19) Europäisches Patentamt / European Patent Office / Office européen des brevets

(11) **EP 3 875 624 A1**

(12) **EUROPEAN PATENT APPLICATION**
published in accordance with Art. 153(4) EPC

(43) Date of publication:
**08.09.2021 Bulletin 2021/36**

(21) Application number: **19879506.4**

(22) Date of filing: **30.10.2019**

(51) Int Cl.:
*C22C 38/00* (2006.01)          *C22C 38/58* (2006.01)
*C22C 38/60* (2006.01)          *C21D 9/46* (2006.01)

(86) International application number:
**PCT/JP2019/042682**

(87) International publication number:
**WO 2020/090936 (07.05.2020 Gazette 2020/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.10.2018  JP 2018204052**

(71) Applicant: **NIPPON STEEL Stainless Steel
Corporation
Tokyo 100-0005 (JP)**

(72) Inventors:
- **YOSHII, Chikako
  Tokyo 100-0005 (JP)**
- **HAMADA, Junichi
  Tokyo 100-0005 (JP)**

(74) Representative: **Vossius & Partner
Patentanwälte Rechtsanwälte mbB
Siebertstrasse 3
81675 München (DE)**

(54) **AUSTENITIC STAINLESS STEEL SHEET**

(57)    Austenitic stainless steel sheet excellent in high-temperature fatigue characteristics able to be applied to exhaust manifolds and turbo exhaust pipes of automobiles and other parts subjected to vibration at 400°C to 600°C temperatures is provided, specifically, austenitic stainless steel sheet excellent in high-temperature fatigue characteristics comprising, by mass%, C: 0.002 to 0.3%, Si: 1.0 to 4.0%, Mn: 0.05 to 3.0%, P: 0.01 to 0.05%, S: 0.0001 to 0.01%, Ni: 5 to 15%, Cr: 15 to 30%, Mo: 0.5 to 4.0%, and N: 0.01 to 0.3%, having a balance of Fe and unavoidable impurities, satisfying Si+Mo≥1.8%, and satisfying A+B>2.5 mm/mm² prescribing the grain boundary lengths.

EP 3 875 624 A1

**Description**

FIELD

The present invention relates to austenitic stainless steel sheet. In particular, it is suitable for a material of a heat resistant part subjected to high cycle fatigue caused by vibration in a high-temperature environment and for example is suitable for an exhaust manifold or turbo exhaust pipe of an automobile.

BACKGROUND

Exhaust manifolds, front pipes, center pipes, mufflers, and parts for protecting the environment by purification of exhaust gas of automobiles are designed to stably carry high-temperature exhaust gas, so materials excellent in oxidation resistance, high-temperature strength, heat fatigue characteristics, and other heat resistance are used. Further, due to the low pH condensed water containing nitric acid ions and sulfuric acid ions caused by the condensation of the exhaust gas (below, referred to as "condensed water"), the environment wherein the parts are used is also a corrosive one, so excellent corrosion resistance is also required for the parts. From the viewpoints of increasingly tougher exhaust gas regulations, improvement of engine performance, and lightening of automobile body weight as well, stainless steel has been frequently used for these parts.

Further, in recent years, in addition to the increasingly tougher exhaust gas regulations, there has been movement for improvement of fuel efficiency performance, reduction of size, etc., so in particular the temperature of the exhaust gas running through the exhaust manifold right under the engine tends to rise. In addition, the number of the automobiles mounted with a turbocharger including a supercharger is increasing. There is also a move toward replacing conventional exhaust manifolds with turbo exhaust pipes. For this reason, further improvement of the heat resistance is being sought from the stainless steel used for exhaust manifolds and turbo exhaust pipes. Regarding the rise in exhaust gas temperature, the exhaust gas temperature, which conventionally was about 900°C, is expected to rise to about 1000°C.

Further, in view of improvement in the efficiency of exhaust gas purification by catalysts, exhaust manifolds and exhaust pipes have been made double pipe structures to hold in the heat and keep the exhaust gas temperature from falling. In the case of a double pipe structure, the inside pipe contacts the high-temperature exhaust gas, so becomes a 900°C or more high temperature, but the outside pipe only rises to 400°C to 600°C or so. Further, since the outside pipe is greatly affected by vibration from the engine or road surface, a bellows working is performed (processing for giving the surface of the pipe a corrugation like a bellows) so as to dampen vibration. Thus, the outside pipe is a part in which high-temperature fatigue characteristics are required.

In the past, as an example of use of a flexible pipe with bellows working applied for suppressing vibration from the engine or road surface, in PTLs 1 and 2, austenitic stainless steel excellent in high-temperature fatigue characteristics is disclosed as a flexible pipe application. According to PTL 1, by adding Nb and N, it is possible to improve the high-temperature fatigue strength at 400°C. According to PTL 2, by adding Nb and Si, it is possible to improve the high-temperature fatigue strength at 600°C.

In PTL 1, austenitic stainless steel to which 0.05 to 0.3% N and 0.05 to 0.3% Nb are added and in which Nb+N$\geq$0.15% is satisfied is disclosed. It describes that this steel has a $1\times10^6$ cycle fatigue strength at 400°C of 25 kgf/mm$^2$ or more. However, there is no description of the fatigue strength at 500°C or 600°C and it is unclear whether the fatigue characteristics in this temperature region are excellent.

In PTL 2, austenitic stainless steel to which 1 to 4%Si and 0.05 to 0.5%Nb are added and in which $6\geq$Si%+10Nb%$\geq4$ is satisfied is disclosed. It is described that this steel has a $1\times10^6$ cycle fatigue strength at 600°C of 27.5 kgf/mm$^2$ or more. However, there is no description of the fatigue strength at 400°C or 500°C and it is unclear whether the fatigue characteristics in this temperature region are excellent.

In PTL 3, austenitic stainless steel containing 2.5 to 4.5% Si and 0 to 0.25% Nb is disclosed. Nb is an optional additive element, but it is described that addition of Nb is important from the viewpoint of improvement of the high-temperature fatigue strength. In the examples, the fatigue limit at 500°C, 600°C is disclosed, but there is no description of the fatigue strength at 400°C and it is unclear whether the fatigue characteristics from 400°C to 500°C are excellent or not.

[CITATIONS LIST]

[PATENT LITERATURE]

[PTL 1] Japanese Unexamined Patent Publication No. 5-98395
[PTL 2] Japanese Unexamined Patent Publication No. 5-339682
[PTL 3] Japanese Unexamined Patent Publication No. 2001-59141

SUMMARY

[TECHNICAL PROBLEM]

A high fatigue strength in the 400°C to 600°C temperature region is required for stainless steel used in an environment such as an exhaust manifold having a double pipe structure wherein the steel is exposed to vibration from the outside while being used in the 400°C to 600°C temperature region.

The present invention was made in consideration of the above matter and has as its object to provide austenitic stainless steel sheet having high-temperature fatigue strength even at a 400°C to 600°C temperature and a part using the stainless steel.

[SOLUTION TO PROBLEM]

To solve the above problem, the inventors engaged in detailed research regarding austenitic stainless steel sheet and a method for producing the same from the viewpoints of the steel constituents and high-temperature fatigue characteristics. As a result, they found that by adjusting the steel constituents to $Si+Mo \geq 1.8\%$ and suitably controlling the grain boundary lengths for the purpose of contributing to strain age hardening, steel sheet excellent in high-temperature fatigue characteristics even at 400°C to 600°C temperature is produced.

The gist of the present invention for solving the above problem is as follows:

(1) An austenitic stainless steel sheet comprising, by mass%,

C: 0.0020 to 0.3000%,
Si: 1.00 to 4.00%,
Mn: 0.05 to 3.00%,
Ni: 5.00 to 15.00%,
Cr: 15.00 to 30.00%,
Mo: 0.50 to 4.00%,
N: 0.010 to 0.300%,
V: 0.05 to 1.00%,
Cu: 0.10 to 2.50%,
Al: 0.002 to 0.100% or less,
P: 0.05% or less,
S: 0.0100% or less, and
a balance of Fe and impurities,
satisfying $Si+Mo \geq 1.80\%$, having grain boundary lengths satisfying (formula 1):

$$A+B>2.5 \text{ mm/mm}^2 \cdots\text{(formula 1)}$$

wherein, A is the sum of general grain boundary lengths per 1 $mm^2$ and B is the sum of $\sum 3$ coincidence grain boundary length per 1 $mm^2$ .

(2) The austenitic stainless steel sheet according to (1) further comprising, by mass%, one or more elements selected from

Nb: 0.005 to 0.300%,
Ti: 0.005 to 0.300%,
B: 0.0002 to 0.0050%,
Ca: 0.0005 to 0.0100%,
W: 0.05 to 3.00%,
Zr: 0.05 to 0.30%,
Sn: 0.01 to 0.50%,
Co: 0.03 to 0.30%,

Mg: 0.0002 to 0.0100%,
Sb: 0.005 to 0.500%,
REM: 0.001 to 0.200%,
Ga: 0.0002 to 0.3000%,
Ta: 0.001 to 1.000%, and
Hf: 0.001 to 1.000%.

(3) The austenitic stainless steel sheet according to (1) or (2), wherein a fatigue limit in a 400°C to 600°C atmosphere plane bending fatigue test is 250 MPa or more.

(4) The austenitic stainless steel sheet excellent in high-temperature fatigue characteristics according to any of (1) to (3) used for an exhaust part.

(5) The austenitic stainless steel sheet according to any of (1) to (3) used for a two-layer structure exhaust manifold.

(6) An exhaust part comprising stainless steel according to any of (1) to (3).

[ADVANTAGEOUS EFFECTS OF INVENTION]

According to the present invention, it is possible to provide austenitic stainless steel for automotive exhaust part use (in particular for double pipe structure use) high in fatigue strength at 400°C to 600°C and able to contribute to increased thinness and lighter weight of parts.

DESCRIPTION OF EMBODIMENTS

Below, the present invention will be explained. What is important as a characteristic of austenitic stainless steel sheet used for heat resistant applications is the high-temperature strength, but in particular the high-temperature fatigue characteristics are extremely important in the case of a double structure exhaust manifold or turbo manifold. As explained above, when a double structure exhaust manifold or turbo manifold is low in high-temperature fatigue strength, fatigue cracks form in the part due to the vibration while running and exhaust gas leaks leading to a drop in the reliability of the performance of the part.

Grain boundary lengths

Strain aging hardening is believed to become greater the longer the lengths of high-angle grain boundaries (grain boundaries having relative orientation differences of 15 degrees or more). After cold rolling and annealing, austenitic stainless steel generally has a microstructure including annealing twins inside the crystal grains. The $\Sigma 3$ coincidence grain boundaries in the austenitic stainless steel after cold rolling and annealing are believed to be mostly twins arising due to annealing, that is, annealing twins. The inventors found that the $\Sigma 3$ coincidence grain boundaries of austenitic stainless steel after cold rolling and annealing are grain boundaries able to contribute to strain age hardening, so the value of "A+B" of the sum of the general grain boundary lengths "A" per unit area plus the sum of the grain boundary lengths "B" of annealing twins ($\Sigma 3$ coincidence grain boundary) was decided to be employed as a measure of strain age hardening.

Constituents

Next, the ranges of constituents will be explained. The % regarding the contents of the constituents indicate mass% unless otherwise indicated.

C: 0.0020 to 0.3000%

C is given a lower limit of 0.0020% to form the austenite structures and secure the high-temperature strength and high-temperature fatigue strength. On the other hand, excessive addition results in excessively large work-hardening and also deterioration of the corrosion resistance due to formation of Cr carbides, in particular deterioration of the intergranular corrosion resistance of the weld zones, so the upper limit is made 0.3000%.

Furthermore, considering the manufacturing costs and hot workability and securing the high-temperature fatigue strength, the lower limit of the content of C is preferably 0.0100% while the upper limit is preferably 0.2500%. The lower limit is more preferably 0.0200% and the upper limit 0.1500%.

Si: 1.00 to 4.00%

Si is sometimes added as a deoxidizing element. In addition, it is an element contributing to the scale adhesion properties and improvement of the high-temperature strength and high-temperature fatigue strength by internal oxidation of Si. In particular, in the present invention, strain aging of solid solution Si at 400°C to 600°C is effective for improving the high-temperature fatigue strength, so 1.00% is made the lower limit. On the other hand, addition of over 4.00% causes excessive hardening and makes manufacturability of the steel sheet and manufacturability of pipes and other parts poor, so the upper limit is made 4.00%.

Further, considering the manufacturing costs, the acid pickling property at the time of manufacture of steel sheet, and the solidification crack susceptibility at the time of welding, the upper limit of the Si content is preferably made 3.50%. Furthermore, considering the high-temperature strength and high-temperature fatigue strength, the lower limit of Si is preferably made 1.50%. The lower limit is more preferably made 2.00% and the upper limit 3.30%.

Mn: 0.05 to 3.00%

Mn is utilized as a deoxidizing element and additionally is added in 0.05% or more for forming austenite structures and securing the adhesion property of scale. On the other hand, addition of over 3.00% causes the work-hardening to become greater and causes the inclusion cleanliness and acid pickling property to become poorer, so the upper limit is made 3.00%.

Furthermore, considering the manufacturing costs, the lower limit of the Mn content is preferably 0.10%. Further, considering the scale adhesion property and work hardenability, the upper limit of Mn content is preferably 2.00%. The lower limit is more preferably 0.50% and the upper limit 1.50%.

P: 0.05% or less

P is an element aiding hot workability and aggravating solidification cracking at the time of manufacture, so the upper limit is made 0.05%. The lower limit of P may be 0%. It is preferable to consider the refining costs and make the lower limit 0.01%. Further, considering the manufacturing costs, the upper limit of the P content is more preferably made 0.04% and the lower limit 0.02%.

S: 0.0100% or less

S is an element which causes the hot workability at the time of manufacture to fall and also causes the corrosion resistance to deteriorate. Further, when coarse sulfides (MnS) are formed, the inclusion cleanliness remarkably deteriorates, so the upper limit is made 0.0100%. The lower limit of the S content may be 0%. Excessive reduction leads to an increase in the refining costs, so the lower limit is preferably made 0.0001 %.

Furthermore, considering the manufacturing costs and oxidation resistance, the upper limit of the S content is preferably made 0.0050% and the lower limit 0.0003%. The upper limit is more preferably made 0.0020% and the lower limit 0.0005%.

Ni: 5.00 to 15.00%

Ni is an element forming austenite structures and an element securing corrosion resistance and oxidation resistance. Further, when less than 5.00%, the stability of the austenite structures decreases and remarkable coarsening of the crystal grains ends up occurring, so 5.00% or more is added. On the other hand, excessive addition invites a rise in costs and hardening, so the upper limit is made 15.00%.

Furthermore, considering the manufacturability, high-temperature strength, and corrosion resistance, the lower limit of the Ni content is preferably made 8.00% and the upper limit 14.00%. The lower limit is more preferably made 10.00% and the upper limit 13.00%.

Cr: 15.00 to 30.00%

Cr is an element for improvement of the corrosion resistance and oxidation resistance. Considering the environment around exhaust parts, from the viewpoint of suppressing abnormal oxidation, 15.00% or more has to be added. On the other hand, excessive addition causes hardening and leads to increased costs, so the upper limit is made 30.00%.

Further, considering the manufacturing costs, steel sheet manufacturability, and workability, the lower limit of the Cr content is preferably made 16.00% and the upper limit 25.00%. The lower limit is more preferably made 17.00% and the upper limit 24.00%.

Mo: 0.50 to 4.00%

Mo is an element making the corrosion resistance better and an element contributing to improvement of the high-temperature strength and high-temperature fatigue strength. In particular, in the present invention, the strain aging of solid solution Mo at 400°C to 600°C is effective for improvement of the high-temperature fatigue strength, so the lower limit is made 0.50% and the upper limit 4.00%.

Furthermore, Mo is an effective element. Considering the inclusion cleanliness, the lower limit of the Mo content is preferably made 0.80% and the upper limit 3.00%. The lower limit is more preferably made 1.00% and the upper limit 2.50%.

N: 0.010 to 0.300%

N, like C, is an element effective for formation of austenite structures and securing high-temperature strength and high-temperature fatigue strength. Therefore, the lower limit is made 0.01%. On the other hand, addition of over 0.300% of N causes the quality of the material at room temperature to remarkably harden and the cold workability at the stage of manufacture of the steel sheet to become poorer. In addition, the manufacturability of pipe and other parts becomes poorer, so the upper limit is made 0.300%.

Furthermore, from the viewpoints of the suppression of pinholes at the time of welding and suppression of intergranular corrosion of the weld zone, the lower limit of the N content is preferably made 0.020% and the upper limit 0.25%. The lower limit is more preferably made 0.040% and the upper limit 0.230%.

V: 0.01 to 1.00%

V is an element for making the corrosion resistance better and for forming V carbides to make the high-temperature strength better, so 0.01% or more is added. On the other hand, excessive addition invites an increase of the alloy costs and a drop in the critical temperature of abnormal oxidation, so the upper limit is made 1.00%.

Furthermore, considering the manufacturability or inclusion cleanliness, the lower limit of the V content is preferably made 0.05% and the upper limit 0.80%. The lower limit is more preferably made 0.09% and the upper limit 0.50%.

Cu: 0.10 to 2.50%

Cu is an element effective for stabilization of austenite structures and improvement of the oxidation resistance, so 0.10% or more is added. On the other hand, excessive addition leads to deterioration of the oxidation resistance and worsening of the manufacturability, so the upper limit is made 2.50%.

Further, considering the corrosion resistance and manufacturability, the lower limit of the Cu content is preferably made 0.14% and the upper limit 2.0%. Furthermore, the lower limit is more preferably made 0.20% and the upper limit 1.50%.

Al: 0.002 to 0.100%

Al is an element added as a deoxidizing element and making the inclusion cleanliness better, so 0.002% or more is added. A preferable lower limit of the amount of Al is 0.010% and the more preferable lower limit is 0.030%. On the other hand, excessive addition easily causes formation of surface defects due to the deterioration of the hot workability and drop in acid pickling property.

In particular, surface defects become starting points for fatigue cracks, so the upper limit of the Al content is prescribed as 0.100%.

Furthermore, the upper limit of the Al content is preferably made 0.060%.

Optional additive elements

Above were the main elements. The balance consists of Fe and impurities. Furthermore, instead of part of the Fe, one or more of the following elements may be included in 0% or more as optional additive elements.

Nb: 0 to 0.300%

Nb is an element bonding with C and N to make the corrosion resistance and intergranular corrosion resistance better and also making the high-temperature strength better. The C and N pinning effect appears starting from 0.005%, so Nb may be included in 0.005% or more. Further, addition of over 0.3% causes remarkably deterioration of the hot workability at the steel sheet manufacturing stage, so the upper limit is made 0.3%.

Furthermore, considering the high-temperature strength, intergranular corrosion of the weld zone, and alloy costs, the lower limit of the Nb content is preferably made 0.01% and the upper limit less than 0.15%. In addition, Nb is an element causing slower recrystallization. To satisfy the grain boundary lengths required for obtaining a sufficient high-temperature fatigue strength, it is necessary to cause completion of the recrystallization in a short time period, so the upper limit of the Nb content is preferably made less than 0.02%.

Ti: 0 to 0.300%

Ti, like Nb, is an element bonding with C and N to make the corrosion resistance and intergranular corrosion resistance better. The C and N pinning effect appears starting from 0.005%, so Ti may be included in 0.005% or more. Further, addition of over 0.30% causes nozzle clogging to easily occur at the casting stage and remarkably deterioration of the manufacturing ability, so the upper limit is made 0.30%.

Furthermore, considering the high-temperature strength, intergranular corrosion of the weld zone, and alloy cost, the lower limit of the Ti content is preferably made 0.01% and the upper limit 0.20%.

B: 0 to 0.0050%

B is an element making the hot workability better at the steel sheet manufacturing stage and has the effect of suppressing work-hardening at ordinary temperature, so may be contained in 0.0002% or more. However, excessive addition causes a drop in the cleanliness and deterioration of the intergranular corrosion due to the formation of borocarbides, so the upper limit is made 0.0050%.

Furthermore, considering the refining costs and drop in ductility, the lower limit of the B content is preferably made 0.0016% and the upper limit 0.0020%.

Ca: 0 to 0.0100%

Ca is added as necessary for desulfurization. This action does not appear when less than 0.0005%, so 0.0005% or more may be contained. Further, when adding over 0.0100%, water soluble inclusions CaS are formed and invite a drop in cleanliness and a remarkable drop in corrosion resistance, so the upper limit is made 0.0100%.

From the viewpoints of the manufacturability and surface quality, the lower limit of the Ca content is preferably made 0.0040% and the upper limit 0.0030%.

W: 0 to 3.00%

W contributes to improvement of the corrosion resistance and high-temperature strength, so may be added as needed to 0.05% or more. Addition of over 3.00% leads to hardening and deterioration of toughness at the time of manufacturing the steel sheet and increased costs, so the upper limit is made 3.00%.

Furthermore, considering the refining costs and manufacturability, the lower limit of the W content is preferably made 0.10% and the upper limit 2.00%.

Zr: 0 to 0.30%

Zr bonds with C or N to make the intergranular corrosion resistance and oxidation resistance of the weld zone better, so 0.05% or more may be added as needed. However, addition of over 0.30% causes a cost increase and causes remarkable deterioration of the manufacturability, so the upper limit is made 0.30%.

Furthermore, considering the refining costs and manufacturability, the lower limit of the Zr content preferably is made 0.05% and the upper limit 0.10%.

Sn: 0 to 0.50%

Sn contributes to improvement of the corrosion resistance and high-temperature strength, so may be added in 0.01% or more as needed. At 0.03% or more, the effect of addition of Sn becomes remarkable. Furthermore, at 0.05% or more, the effect becomes more remarkable. Addition of over 0.50% sometimes causes slab cracking at the time of manufacture of the steel sheet, so the upper limit is made 0.50%.

Furthermore, considering the refining costs and manufacturability, the upper limit is preferably made 0.30%.

Co: 0 to 0.30%

Co contributes to improvement of the high-temperature strength, so may be added in 0.03% or more as needed. Addition of over 0.30% leads to hardening and deterioration of the toughness and increase of costs at the time of manufacture of the steel sheet, so the upper limit is made 0.3%.
Furthermore, considering the refining costs and manufacturability, the lower limit of the Co content is preferably made 0.03% and the upper limit 0.10%.

Mg: 0 to 0.0100%

Mg is sometimes made to be added as a deoxidizing element. In addition, it is an element contributing to improvement of the inclusion cleanliness and refinement of the structures by refining and dispersing oxides in the microstructure of the slab. This effect appears from 0.0002% or more, so Mg may be added with a lower limit of 0.0002%. However, excessive addition leads to deterioration of the weldability and corrosion resistance and a drop in the workability of the part due to the coarse inclusions, so the upper limit is made 0.0100%.
Considering the refining costs, the lower limit of the Mg content is preferably made 0.0003% and the upper limit 0.0050%.

Sb: 0 to 0.500%

Sb is an element which segregates at the grain boundaries to act to raise the high-temperature strength. To obtain the effect of addition, the Sb content may be made 0.005% or more. However, when over 0.500%, Sb segregation occurs and cracking occurs at the time of welding, so the upper limit is made 0.500%. Considering the high-temperature characteristics and manufacturing costs and toughness, the lower limit of the Sb content is preferably made 0.030% and the upper limit 0.300%.
More preferably the lower limit of the Sb content is made 0.050% and the upper limit 0.200%.

REMs: 0 to 0.200%

REMs (rare earth elements) are effective for improvement of the oxidation resistance and may be added in 0.001% or more as needed. Further, even when added in over 0.2%, the effect of REMs becomes saturated and oxides of REMs cause a drop in the corrosion resistance, so these are preferably added in 0.001 to 0.2%. Considering the manufacturing costs, the lower limit is preferably made 0.002% and the upper limit 0.10%.
REMs (rare earth elements) are as generally defined. This is a general term of the two elements of scandium (Sc) and yttrium (Y) and the 15 elements (lanthanoids) from lanthanum (La) to ruthium (Lu). They may be added alone or may be mixtures.

Ga: 0 to 0.3000%

Ga improves the corrosion resistance and suppresses hydrogen embrittlement, so may be added in 0.3000% or less, but addition of over 0.3000% causes formation of coarse sulfides and deterioration of the r-value. From the viewpoint of formation of sulfides and hydrogenates, the lower limit is made 0.0002%.
Furthermore, from the viewpoint of the manufacturability and costs, 0.0020% or more is more preferable.

Ta: 0 to 1.000%; Hf: 0 to 1.000%

To improve the high-temperature strength, each of Ta and Hf may be added in 0.001 to 1.0%. The effect of addition of Ta or Hf is caused with a content of one of Ta or Hf of 0.001 % or more. With 0.010% or more, a high strength is obtained.

Impurity elements

As, Pb, and other generally harmful elements and impurity elements are desirably decreased as much as possible. Here, "impurity elements" are elements which inevitably or unavoidably enter the steel from the raw materials such as ore or slag or from the manufacturing environment etc. when industrially manufacturing steel. The allowable contents of such impurity elements are ranges not having detrimental effects on the austenitic stainless steel sheet of the present invention. As impurity elements, the above-mentioned P and S to start and Zn, Pb, Se, H, Tl, Bi, etc. may be illustrated.

Si+Mo≥1.80%

Si and Mo are added for raising the fatigue strength at 400°C to 600°C. This improvement of the fatigue strength is believed to be caused by way of the solid solution Si and Mo causing strain aging. The inventors thought that strain aging appears even with sole addition, but depending on the element, the temperature region in which the strain aging easily appears differs. Therefore, the inventors expected that when compoundly adding Si and Mo it would be possible to expand the applicable temperature region which in turn would be effective for improving the high-temperature fatigue strength. Table 1-1 shows the variation of the fatigue strength when varying the amounts of addition of Si and Mo (unit: mass%). Table 1-2 shows the basic steel composition (unit: mass%) of the steel used for investigating the improvement in the high-temperature fatigue strength due to compound addition of Si and Mo.

In the case of addition of Si alone, the fatigue strength $\sigma_w \geq$250 MPa is satisfied at 400°C and 500°C, while in the case of addition of Mo alone, it is satisfied at 500°C and 600°C, but in the case of compound addition to give Si+Mo≥1.80, the fatigue strength $\sigma_w \geq$250 MPa is satisfied at 400°C to 600°C as a whole. That is, it is understood that Si is effective for improvement of the fatigue strength in the temperature region near 400 to 500°C and Mo in the temperature region near 500 to 600°C. Therefore, by adding Si and Mo in a total of 1.80% or more, it is possible to obtain a high fatigue strength in the temperature region near 400 to 600°C.

[Table 1]

Table 1-1

| Si | Mo | Si+Mo | $\sigma_w$(400°C) | $\sigma_w$(500°C) | $\sigma_w$(600°C) |
|---|---|---|---|---|---|
| 1.80 | 0 | 1.80 | 270 | 255 | 240 |
| 0 | 1.80 | 1.80 | 240 | 260 | 270 |
| 1.00 | 0.80 | 1.80 | 280 | 280 | 270 |

[Table 2]

Table 1-2

| C | Mn | Ni | Cr | N | V |
|---|---|---|---|---|---|
| 0.0200 to 0.1000 | 0.70 to 0.80 | 12.10 to 13.00 | 17.10 to 19.20 | 0.040 to 0.100 | 0.01 to 1.00 |

[Table 3]

| Cu | Al | P | S |
|---|---|---|---|
| 0.10 to 2.50 | 0.002 to 0.100 | 0.02 to 0.03 | 0.0002 to 0.0003 |
| Note) Balance of Fe and impurities. | | | |

General grain boundary length A+$\sum$3 coincidence grain boundary length B>2.5 mm/mm$^2$

At high-angle grain boundaries, strain builds up and causes hardening. For this reason, it is believed that the longer the general grain boundary lengths the higher the frequency of occurrence of strain age hardening and the greater the strain age hardening. Austenitic stainless steel generally has a microstructure in which annealing twins are introduced into the crystal grains. The inventors found that the $\sum$3 coincidence grain boundaries are grain boundaries able to contribute to strain age hardening.

Therefore, the present invention is characterized in that the sum of the general grain boundary lengths and the $\sum$3 coincidence grain boundary length per unit area is longer than 2.5 mm/mm$^2$.

A grain boundary length is measured as follows by cutting out from the cold-rolled and annealed stainless steel sheet a cross-section parallel to the rolling direction and using the center of sheet thickness as the observed surface.

Further, the center of sheet thickness is a region from a 1/4 sheet thickness depth of the cold rolled sheet to a 1/4 sheet thickness depth under the back surface. Further, the cutout location of the parallel cross-section is not particularly limited so long as parallel to the rolling direction of the cold rolled sheet.

First, an analysis tool of an OIM EBSD system comprising an FE-SEM (made by JEOL) and a personal computer and camera control unit (made by TSL) is used to obtain crystal orientation data from the observed surface by a measurement power of 1000X, a measurement interval of 0.5 $\mu$m, and a measurement field of 19 mm$^2$. Next, an analysis program "OIM Analysis" is used to measure all of the grain boundary lengths (including high-angle grain boundaries and low-angle grain boundaries) per 1 mm$^2$ from the acquired crystal orientation data.

In the present invention, the "general grain boundary length" is the value calculated by subtracting from the sum of the lengths per unit area of the high-angle grain boundaries the sum of the lengths per unit area of the low energy grain boundaries. That is, the general grain boundary length (unit: mm/mm$^2$) is defined as the value obtained by deducting from the sum of lengths per 1 mm$^2$ of high-angle grain boundaries the sum of lengths of $\Sigma$3 to $\Sigma$29 coincidence site lattice grain boundaries.

Method of production

Next, the method of production will be explained. The method for producing a steel sheet of the present invention includes a series of steps from steelmaking-hot rolling-annealing and pickling or steelmaking-hot rolling-annealing and pickling-cold rolling-annealing and pickling. The steelmaking is preferably carried out by the method of melting steel containing the main element constituents and the optional additive elements added in accordance with need by way of an electric furnace or a converter then performing secondary refinement. The molten steel which was melted is made into a slab by a known casting method (continuous casting etc.). The slab is heated to a predetermined temperature and hot-rolled to a predetermined sheet thickness by continuous rolling. After hot-rolling, the steel sheet is generally treated to anneal and pickle the hot-rolled sheet, but the annealing of the hot-rolled sheet may also be omitted. The steel sheet according to the present invention is subjected to a manufacturing step for securing the crystal grain boundary lengths required in the steps carried out after the annealing of the hot-rolled sheet (annealing may be omitted).

The hot-rolled and annealed stainless steel sheet is cold-rolled to a predetermined sheet thickness. The inventors found that it is useful to suitably control the rolling reduction of cold rolling and the subsequent annealing temperature and annealing time in order to form a microstructure with grain boundary lengths of the "general grain boundary length A+$\Sigma$3 coincidence grain boundary length B > 2.5 mm/mm$^2$ ". When the rolling reduction is large, a large amount of strain is introduced into the steel sheet and structures with long general grain boundary lengths are easily obtained. For this reason, in the present application, the rolling reduction of cold rolling is prescribed as 80% or more. More preferably it is 83% or more.

When recovery and recrystallization of the microstructure of the steel sheet occur due to the annealing after cold rolling, $\Sigma$3 coincidence grain boundaries are formed in the crystal grains. When the annealing temperature is over 1100°C, the recovery and recrystallization of the microstructure of the steel sheet occur in a short time. However, when exposed to a high temperature for a long time, recrystallized grains grow and the general grain boundary length becomes shorter. When the annealing temperature is too high, the recrystallized grains remarkably grow and the fatigue strength falls. For this reason, the annealing temperature is preferably 1300°C or less. On the other hand, when the annealing temperature is 1100°C or less, it takes too long a time for the recovery and recrystallization of the microstructure of the steel sheet, and further fewer $\Sigma$3 coincidence boundaries are formed. For this reason, in the present invention of the present application, the annealing after cold rolling is performed by an annealing temperature of 1110°C or more and an annealing time of over 0 second to 55 seconds. Preferably, the annealing temperature is made 1 120°C or more and the annealing time is made 40 seconds or less. Due to this, it is possible to produce austenitic stainless steel sheet having the above grain boundary lengths and high in high-temperature fatigue strength. In the annealing step after the cold rolling, the temperature elevation rate and cooling rate and other manufacturing conditions other than the manufacturing conditions explained above are not particularly limited.

The cold-rolled then annealed steel sheet is acid pickled and the scale formed on the steel surface due to the annealing is removed. The acid pickling step may be carried out by way of any method for chemical descaling such as sulfuric acid, nitrofluoric acid, nitric acid electrolysis, etc. As pretreatment, the sheet is immersed in molten alkali salt at a suitable temperature for a suitable time.

Note that the other conditions in the manufacturing process may be suitably selected. For example, the slab thickness, hot rolled sheet thickness, etc. may be suitably designed. In the step of cold-rolling, the roll diameters, rolling oil, number of rolling passes, rolling rate, rolling temperature, etc. may be suitably selected. A step of annealing may be inserted in the middle of the cold rolling. Both batch type annealing and continuous type annealing may be used. Further, the pickling step may be carried out by way of nitric acid or sulfuric acid electrolysis pickling or otherwise using sulfuric acid or hydrochloric acid. After annealing and pickling of the cold rolled sheet, a tension leveler etc. may be used to adjust the shape and quality. In addition, for the purpose of making the press formability better, it is also possible to impart a lubrication film to the product sheet.

EXAMPLES

Each of the steels of the chemical compositions shown in Table 2 and Table 3 was melted, then hot rolled, annealed and pickled in the state of the hot rolled sheet, cold rolled, and annealed and pickled a final time to obtain a 2.0 mm thick steel sheet. In order to confirm the effects of the cold-rolling reduction, final annealing temperature, and annealing time, comparative steels were also produced by changing some of the conditions. A high-temperature plane bending fatigue test was carried out using a JIS No. 1 test piece at temperatures of 400°C, 500°C, and 600°C with rates of repetition of 1700 cpm, full swing, and number of cycles for stopping the test of $1 \times 10^7$ cycles. The fatigue limit was made the average value of the maximum amplitude stress at which no breakage occurred at the time of reaching $1 \times 10^7$ cycles and the minimum amplitude stress at breakage. The grain boundary length was measured by the above-mentioned method. First, a cross-section parallel to the rolling direction was cut out from the cold-rolled and annealed stainless steel sheet. The center of sheet thickness was used as the observed surface. The observed surface was mechanically finished to be made a mirror surface by polishing using emery paper or polishing using diamond paste, then was chemically polished using a colloidal silica solution to remove the damaged layer introduced due to the mechanical polishing. For observation, an FE-SEM (made by JEOL, JSM7000F)/EBSD/OIM (made by TSL) was used under the conditions of a measurement power of 1000X, measurement interval of 0.5 $\mu$m, and measurement field of 19 mm$^2$. After observation, the analysis software "OIM Analysis 7" made by TSL was used to separate the general grain boundary lengths and $\sum 3$ coincidence grain boundary length.

[Table 4]

Table 2

| | Steel | Chemical composition (mass%) | | | | | | | | | | | | Si+Mo |
|---|---|---|---|---|---|---|---|---|---|---|---|---|---|---|---|
| | No. | C | Si | Mn | P | S | Ni | Cr | Mo | Al | Cu | N | V | Optional additive elements | |
| Invention examples | A1 | 0.0120 | 3.11 | 0.77 | 0.02 | 0.0003 | 13.26 | 17.25 | 1.38 | 0.038 | 0.18 | 0.048 | 0.10 | - | 4.49 |
| | A2 | 0.0130 | 3.05 | 0.81 | 0.02 | 0.0002 | 13.31 | 17.31 | 1.34 | 0.036 | 0.15 | 0.041 | 0.12 | Ca: 0.0040 | 4.39 |
| | A3 | 0.0900 | 1.91 | 1.44 | 0.03 | 0.0002 | 12.07 | 24.25 | 0.58 | 0.040 | 0.22 | 0.220 | 0.10 | Ca: 0.0060 | 2.49 |
| | A4 | 0.1400 | 3.21 | 0.61 | 0.03 | 0.0005 | 10.32 | 17.94 | 0.61 | 0.060 | 0.15 | 0.030 | 0.10 | B: 0.0016 | 3.82 |
| | A5 | 0.0200 | 1.87 | 0.81 | 0.02 | 0.0005 | 10.02 | 17.81 | 0.63 | 0.060 | 1.79 | 0.010 | 0.12 | - | 2.50 |
| | A6 | 0.0300 | 2.50 | 0.50 | 0.02 | 0.0006 | 9.26 | 17.15 | 0.51 | 0.050 | 0.16 | 0.060 | 0.10 | - | 3.01 |
| | A7 | 0.0500 | 1.53 | 1.40 | 0.02 | 0.0004 | 13.83 | 19.32 | 2.16 | 0.050 | 0.15 | 0.060 | 0.10 | - | 3.69 |
| | A8 | 0.0200 | 1.15 | 0.75 | 0.02 | 0.0002 | 12.30 | 16.43 | 1.04 | 0.040 | 0.16 | 0.130 | 0.10 | Ca: 0.0040,REM: 0.015 | 2.19 |
| | A9 | 0.0300 | 2.21 | 0.81 | 0.02 | 0.0006 | 13.14 | 16.83 | 2.41 | 0.050 | 0.15 | 0.080 | 0.10 | Nb: 0.010 | 4.62 |
| | A10 | 0.0100 | 1.31 | 0.74 | 0.02 | 0.0002 | 12.10 | 23.16 | 0.61 | 0.060 | 0.16 | 0.050 | 0.10 | Ca: 0.005, Mg: 0.001 | 1.92 |
| | A11 | 0.0400 | 1.30 | 0.73 | 0.02 | 0.0005 | 12.55 | 18.25 | 0.60 | 0.050 | 0.16 | 0.020 | 0.10 | Ti: 0.150 | 1.90 |
| | A12 | 0.0500 | 1.43 | 0.75 | 0.02 | 0.0004 | 13.31 | 18.24 | 0.63 | 0.030 | 0.14 | 0.020 | 0.10 | W: 0.45 | 2.06 |
| | A13 | 0.0300 | 1.32 | 0.75 | 0.03 | 0.0003 | 12.51 | 18.20 | 0.64 | 0.040 | 0.15 | 0.030 | 0.10 | Ga: 0.0010 | 1.96 |
| | A14 | 0.0500 | 1.33 | 0.73 | 0.02 | 0.0005 | 12.53 | 18.46 | 0.65 | 0.060 | 0.15 | 0.050 | 0.10 | Sn: 0.11 | 1.98 |
| | A15 | 0.0500 | 1.46 | 0.73 | 0.02 | 0.0005 | 12.55 | 18.25 | 0.63 | 0.050 | 0.16 | 0.040 | 0.10 | Zr: 0.08 | 2.09 |
| | A16 | 0.0400 | 1.36 | 0.73 | 0.02 | 0.0004 | 12.41 | 18.24 | 0.64 | 0.060 | 0.16 | 0.060 | 0.10 | Co: 0.05 | 2.00 |
| | A17 | 0.0400 | 1.31 | 0.70 | 0.03 | 0.0003 | 12.51 | 18.20 | 0.62 | 0.060 | 0.14 | 0.040 | 0.10 | Sb: 0.100 | 1.93 |
| | A18 | 0.0300 | 1.30 | 0.71 | 0.02 | 0.0006 | 12.52 | 18.23 | 0.61 | 0.070 | 0.16 | 0.050 | 0.10 | Ta: 0.200 | 1.91 |
| | A19 | 0.0400 | 1.40 | 0.73 | 0.02 | 0.0005 | 12.55 | 18.22 | 0.64 | 0.030 | 0.15 | 0.060 | 0.10 | Hf: 0.200 | 2.04 |
| | A20 | 0.0400 | 1.30 | 0.73 | 0.02 | 0.0003 | 12.56 | 18.25 | 0.63 | 0.040 | 0.16 | 0.040 | 0.10 | B: 0.0050 | 1.93 |
| | A21 | 0.0400 | 2.51 | 0.81 | 0.02 | 0.0003 | 9.21 | 17.93 | 1.20 | 0.030 | 0.38 | 0.040 | 0.07 | - | 3.71 |
| | A22 | 0.0400 | 3.21 | 0.76 | 0.02 | 0.0003 | 13.35 | 17.31 | 1.35 | 0.038 | 0.16 | 0.060 | 0.16 | - | 4.56 |

EP 3 875 624 A1

[Table 5]

[Table 5]

Table 3

| | Steel no. | Chemical composition (mass%) | | | | | | | | | | | | | Si+Mo | |
| | | C | Si | Mn | P | S | Ni | Cr | Mo | Al | Cu | N | V | Optional additive elements | | |
| Comparative examples | B1 | 0.0500 | 3.29 | 0.76 | 0.024 | 0.0003 | 13.77 | 19.21 | 0.17* | 0.010 | 0.15 | 0.020 | 0.10 | Ca: 0.0060 | 3.46 | |
| | B2 | 0.0500 | 0.48* | 1.03 | 0.026 | 0.0004 | 18.84* | 24.81 | 0.16* | 0.030 | 0.21 | 0.030 | 0.10 | Ca: 0.0040 | 0.64 | * |
| | B3 | 0.1400 | 1.80 | 0.81 | 0.023 | 0.0002 | 10.13 | 17.85 | 0.01* | 0.020 | 0.16 | 0.230 | 0.10 | - | 1.81 | |
| | B4 | 0.0400 | 0.01* | 1.14 | 0.026 | 0.0003 | 12.75 | 17.82 | 1.80 | 0.060 | 0.16 | 0.050 | 0.10 | B: 0.0015 | 1.81 | |
| | B5 | 0.0600 | 0.45* | 1.14 | 0.025 | 0.0002 | 14.13 | 18.52 | 0.15* | 0.040 | 0.15 | 0.040 | 0.10 | - | 0.60 | * |
| | B6 | 0.0005* | 2.13 | 0.71 | 0.024 | 0.0003 | 14.10 | 17.81 | 0.63 | 0.060 | 0.20 | 0.010 | 0.10 | - | 2.76 | |
| | B7 | 0.0400 | 3.51 | 0.77 | 0.023 | 0.0005 | 11.83 | 18.21 | 0.81 | 0.020 | 0.15 | 0.005* | 0.10 | - | 4.32 | |

[Table 6]

[Table 6]

Table 4

| Steel no. | Method of production | | | Microstructure | Fatigue limit | | |
|---|---|---|---|---|---|---|---|
| | Coldrolling reduction (%) | Cold-rolled sheet annealing temperature (°C) | Cold-rolled sheet annealing time (sec) | Grain boundary length (A+B) (mm/mm$^2$) | $\sigma$w (400°C) | $\sigma$w (500°C) | $\sigma$w (600°C) |
| A1 | 83 | 1110 | 40 | 3.3 | 270 | 280 | 250 |
| A2 | 84 | 1120 | 40 | 3.2 | 270 | 280 | 250 |
| A3 | 80 | 1180 | 50 | 3.4 | 290 | 310 | 290 |
| A4 | 82 | 1120 | 51 | 3.3 | 270 | 260 | 250 |
| A5 | 80 | 1130 | 38 | 3.2 | 250 | 260 | 250 |
| A6 | 81 | 1110 | 43 | 3.2 | 250 | 260 | 250 |
| A7 | 80 | 1170 | 41 | 3.1 | 250 | 270 | 270 |
| A8 | 80 | 1160 | 48 | 3.1 | 250 | 250 | 250 |
| A9 | 80 | 1150 | 43 | 3.2 | 250 | 260 | 250 |
| A10 | 80 | 1130 | 50 | 2.8 | 280 | 260 | 260 |
| A11 | 80 | 1160 | 46 | 2.8 | 270 | 250 | 250 |
| A12 | 81 | 1180 | 42 | 2.9 | 270 | 250 | 250 |
| A13 | 80 | 1150 | 43 | 2.8 | 270 | 250 | 250 |
| A14 | 80 | 1160 | 42 | 2.6 | 270 | 250 | 250 |
| A15 | 80 | 1130 | 39 | 3.2 | 270 | 250 | 250 |
| A16 | 84 | 1130 | 40 | 3.1 | 270 | 250 | 250 |
| A17 | 80 | 1160 | 45 | 2.6 | 270 | 250 | 250 |
| A18 | 80 | 1170 | 37 | 2.9 | 270 | 250 | 250 |
| A19 | 80 | 1170 | 41 | 3.1 | 270 | 250 | 250 |
| A20 | 80 | 1160 | 40 | 2.7 | 270 | 250 | 250 |
| A21 | 83 | 1120 | 50 | 3.3 | 260 | 270 | 260 |
| A22 | 81 | 1140 | 40 | 3.4 | 270 | 260 | 260 |

Invention examples

[Table 7]

Table 5

| | Steel no. | Method of production | | | Microstructure | | Fatigue limit | | |
|---|---|---|---|---|---|---|---|---|---|
| | | Cold-rolling reduction (%) | Cold-rolled sheet annealing temperature (°C) | Cold-rolled sheet annealing time (sec) | Grain boundary lengths (A+B) (mm/mm$^2$) | | $\sigma$w (400°C) | $\sigma$w (500°C) | $\sigma$w (600°C) |
| Comparative examples | A2-1 | 60* | 1180 | 40 | 2.4 | * | 250 | 240 | 240 |
| | A2-2 | 83 | 1180 | 70* | 1.8 | * | 240 | 230 | 230 |
| | A2-3 | 83 | 1100* | 120* | 2.4 | * | 250 | 240 | 240 |
| | A2-4 | 83 | 1100* | 40 | 2.0 | * | 240 | 220 | 220 |
| | B1 | 81 | 1160 | 45 | 2.7 | | 270 | 250 | 240 |
| | B2 | 82 | 1170 | 47 | 2.7 | | 240 | 240 | 230 |
| | B3 | 81 | 1150 | 50 | 2.7 | | 270 | 255 | 240 |
| | B4 | 80 | 1160 | 48 | 2.7 | | 240 | 260 | 270 |
| | B5 | 83 | 1170 | 38 | 2.7 | | 220 | 220 | 210 |
| | B6 | 81 | 1200 | 36 | 2.7 | | 240 | 240 | 230 |
| | B7 | 80 | 1160 | 46 | 2.8 | | 240 | 240 | 230 |

## EP 3 875 624 A1

The manufacturing conditions and grain boundary lengths A+B (mm/mm$^2$) and the fatigue limit values at 400°C, 500°C, and 600°C of the invention examples shown in Table 2 and the comparative examples shown in Table 3 are shown in Table 4 and Table 5.

As will be understood from Table 4, in the invention examples, in all of the cases, a fatigue limit value of 250 MPa or more is cleared. Table 4 guarantees that the invention examples can be safely utilized as a material for a part which is to be exposed to a 400 to 600°C or so high temperature and a vibrating environment.

On the other hand, Table 5 shows the method of production and microstructure and fatigue limit value of the comparative examples.

These comparative examples are the four examples of A2-1 to A2-4 with the same chemical compositions as those of the invention example A2 and the seven examples of B1 to B7 with chemical compositions not satisfying at least one kind of element ranges specified in the present invention.

Comparative Example A2-1 had an overly small cold rolling reduction of 60%, while A2-2 had an annealing time of the cold rolled sheet of an overly long 70 seconds. Further, A2-3 had an annealing temperature of a too low 1100°C and further an annealing time of an overly long 120 seconds. Further, A2-4 had only an annealing temperature of an overly low 1100°C.

Due to the above-mentioned unsuitable manufacturing process, in these four comparative examples, the value of the grain boundary lengths (A+B) failed to reach 2.5 mm/mm$^2$ in each case. As a result, only the fatigue limit value at 400°C of A2-1 reached 250 MPa. In all of the other cases, the fatigue limit values at 400°C, 500°C, and 600°C fell below 250 MPa. As a result, it would be difficult to apply those comparative examples for a material for parts subjected to high vibration in these temperature environments.

The seven examples of Comparative Examples B1 to B7 use methods of production in which the cold rolling reduction is 80% or more, the annealing temperature is 1 110°C or more, and the annealing time is 50 sec or less, but constitute a group in which the content of some sort of constituent element does not satisfy the conditions prescribed in the present invention.

B1 to B3 all have Mo contents of low values not satisfying the lower limit value of 0.5%. In addition, B2 has an Si content of the prescribed value or less while Ni is contained in over the upper limit value.

B4 and B5 have Si contents not satisfying the lower limit values of the prescribed values. In addition, B5 also has an Mo content of a low value not satisfying the lower limit value prescribed in the present invention.

B6 has a C content not reaching the lower limit value. Further, B7 has an N content not reaching the lower limit value.

Comparative Examples B1 to B7 all have indicators of grain boundary lengths of values of A+B which satisfied the 2.5 mm/mm$^2$ or more of the prescribed value of the present invention, but were not able to satisfy the metric of 250 MPa of the fatigue limit at 400°C, 500°C, and 600°C at one or more temperatures. It was found that they were unsuitable for use as materials of vibration members in these temperature environments.

INDUSTRIAL APPLICABILITY

According to the present invention, it is possible to provide austenitic stainless steel sheet excellent in high-temperature fatigue characteristics, in particular, in heat resistance. By using the material made by applying the present invention in particular as an exhaust manifold or exhaust pipe or turbocharger part of an automobile, since the steel can be made thinner than conventional austenitic stainless steel, lightening of weight can be promoted and also exhaust gas regulations met and fuel efficiency improved. In the case of an exhaust manifold, the austenitic stainless steel sheet according to the present invention can be applied to any of a turbo exhaust pipe with bellows working applied as a measure against high vibration due to mounting the turbocharger or pressed sheet part, pipe part, or two-layer pipe part. Furthermore, the invention is not limited to an automobile or two-wheeled vehicle. It can be applied to exhaust and intake parts exposed to 400 to 600°C while subjected to vibration such as in various boilers, fuel cell systems, plants, etc. The present invention is extremely advantageous in industry.

**Claims**

**1.** An austenitic stainless steel sheet comprising, by mass%,

C: 0.0020 to 0.3000%,
Si: 1.00 to 4.00%,
Mn: 0.05 to 3.00%,
Ni: 5.00 to 15.00%,
Cr: 15.00 to 30.00%,

Mo: 0.50 to 4.00%,
N: 0.010 to 0.300%,
V: 0.05 to 1.00%,
Cu: 0.10 to 2.50%,
Al: 0.002 to 0.100% or less,
P: 0.05% or less,
S: 0.0100% or less, and
a balance of Fe and impurities,
satisfying Si+Mo≥1 .80%, having grain boundary lengths satisfying (formula 1):

$$A+B > 2.5 \text{ mm/mm}^2 \cdots \text{(formula 1)}$$

wherein, A is the sum of general grain boundary lengths per 1 $mm^2$ and B is the sum of $\Sigma 3$ coincidence site lattice grain boundary lengths per 1 $mm^2$ .

2. The austenitic stainless steel sheet according to claim 1 further comprising, by mass%, one or more elements selected from

Nb: 0.005 to 0.300%,
Ti: 0.005 to 0.300%,
B: 0.0002 to 0.0050%,
Ca: 0.0005 to 0.0100%,
W: 0.05 to 3.00%,
Zr: 0.05 to 0.30%,
Sn: 0.01 to 0.50%,
Co: 0.03 to 0.30%
Mg: 0.0002 to 0.0100%,
Sb: 0.005 to 0.500%,
REM: 0.001 to 0.200%,
Ga: 0.0002 to 0.3000%,
Ta: 0.001 to 1.000%, and
Hf: 0.001 to 1.000%.

3. The austenitic stainless steel sheet according to claim 1 or 2, wherein a fatigue limit in a 400°C to 600°C atmosphere plane bending fatigue test is 250 MPa or more.

4. The austenitic stainless steel sheet according to any of claims 1 to 3 used for an exhaust part.

5. The austenitic stainless steel sheet according to any of claims 1 to 3 used for a double pipe structure exhaust manifold.

6. An exhaust part comprising austenitic stainless steel according to any of claims 1 to 3.

## INTERNATIONAL SEARCH REPORT

| | International application No. |
|---|---|
| | PCT/JP2019/042682 |

**A. CLASSIFICATION OF SUBJECT MATTER**
Int.Cl. C22C38/00(2006.01)i, C22C38/58(2006.01)i, C22C38/60(2006.01)i, C21D9/46(2006.01)n
According to International Patent Classification (IPC) or to both national classification and IPC

**B. FIELDS SEARCHED**

Minimum documentation searched (classification system followed by classification symbols)
Int.Cl. C22C38/00-38/60, C21D9/46-9/48

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | WO 2017/164344 A1 (NIPPON STEEL & SUMIKIN STAINLESS STEEL CORPORATION) 28 September 2017, claims 1, 7 & EP 3441494 A1, claims 1, 7 & CN 108779532 A & KR 10-2018-0115288 A | 1-6 |
| A | JP 2011-117024 A (NIPPON STEEL & SUMIKIN STAINLESS STEEL CORPORATION) 16 June 2011, claim 1, tables 2-3 & EP 2508639 A1, claim 1 tables 2-3 & WO 2011/067979 A1 & KR 10-2012-0093996 A & CN 102753717 A | 1-6 |

☒ Further documents are listed in the continuation of Box C.     ☐ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 December 2019 (13.12.2019) | 24 December 2019 (24.12.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT

| | International application No. |
|---|---|
| | PCT/JP2019/042682 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2016/159011 A1 (NIPPON STEEL & SUMIKIN STAINLESS STEEL CORPORATION) 06 October 2016, claim 1, examples & US 2018/0080106 A1, claim 1 examples & EP 3279359 A1 & KR 10-2017-0123647 A | 1-6 |
| A | KR 10-2018-0074408 A (POSCO) 03 July 2018, claim 1, examples & WO 2018/117488 A1 | 1-6 |
| A | JP 2012-207259 A (NIPPON STEEL & SUMIKIN STAINLESS STEEL CORPORATION) 25 October 2012, claim 1, examples & US 2013/0336834 A1, claim 4 examples & WO 2012/133574 A1 & CN 103380224 A & KR 10-2013-0123443 A | 1-6 |
| A | JOHANNSEN, D. L. et al., "Influence of Annealing Treatment on the Formation of Nano/Submicron Grain Size AISI 301 Austenitic Stainless Steels", Metallurgical and Materials Transactions A, Physical Metallurgy and Materials Science, August 2006, vol. 37A no. 8, pp. 2325-2338 | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5098395 A
- JP 5339682 A
- JP 2001059141 A